# EUROPÄISCHE PATENTSCHRIFT

(11) **EP 1 657 021 B1**
(45) Veröffentlichungstag und Bekanntmachung des Hinweises auf die Patenterteilung: **20.12.2006**
(21) Anmeldenummer: 05016932.5
(22) Anmeldetag: 04.08.2005
(51) Int. Cl.: B23Q 7/14, B23Q 7/04, B23Q 7/16

(54) **Fertigungsstrasse zur Bearbeitung von Werkstücken, mit einem Werkstückgreifer**
Transfer line for machining workpieces, with a workpiece gripper
Machine transfert pour l'usinage de pièces, avec un manipulateur de pièces

(30) Priorität: 10.11.2004 DE 102004054191
(43) Veröffentlichungstag der Anmeldung: 17.05.2006
(73) Patentinhaber: Cross Hüller GmbH, 71636 Ludwigsburg (DE)
(72) Erfinder: Stengele, Gerald, 71636 Ludwigsburg (DE); Nussbaum, Jörg-Michael, Dr., 71638 Ludwigsburg (DE)
(74) Vertreter: Rau, Manfred

(56) Entgegenhaltungen:
- US-A- 5 435 674
- US-A1- 2003 172 510
- PATENT ABSTRACTS OF JAPAN Bd. 006, Nr. 201 (M-163), 13. Oktober 1982 (1982-10-13) & JP 57 107757 A (TOYODA MACH WORKS LTD), 5. Juli 1982 (1982-07-05)

## Beschreibung

Die Erfindung betrifft eine Fertigungsstraße zur Bearbeitung von Werkstücken nach dem Oberbegriff des Anspruches 1 (siehe, z.B., US-2003/0172510-A).

Derartige, in der Praxis allgemein verbreitete Fertigungsstraßen weisen mehrere nebeneinander angeordnete Werkzeugmaschinen auf, die von mindestens einer Ladeeinrichtung mit Werkstücken versorgt werden. Diese werden auf einer oder mehreren Werkstück-Transport-Einrichtungen einer Werkstück-Übergabe-Position zugeführt, an der sie mittels der Lade-Einrichtung übernommen bzw. abgeführt werden. Die Werkstück-Transport-Einrichtungen verlaufen rechtwinklig zur Anordnung der Werkzeugmaschinen bzw. der Bewegungsrichtung der Ladeeinrichtung.

Die Werkstücke, z. B. Zylinderköpfe oder Zylinderblöcke von Motoren, müssen von verschiedenen Seiten bearbeitet werden können. Dies heißt, dass sie entweder liegend oder stehend in der Werkzeugmaschine aufgespannt werden. Um dies zu ermöglichen, sind in den Ladeeinrichtungen Vorrichtungen vorgesehen, bei denen mittels entsprechender Antriebe die Werkstücke gedreht und gekippt werden können. Der bewegbare Teil der Ladeeinrichtung wird hierdurch hinsichtlich der Baugröße, der bewegten Massen und der Antriebe für die verschiedenen Bewegungen der Ladeantriebe sehr aufwändig, was zu einer Erhöhung der Kosten und zu einer Reduktion der Bewegungsgeschwindigkeit der Ladeeinrichtungen führt.

Es ist weiterhin bekannt, unmittelbar an den einzelnen Werkzeugmaschinen Vorrichtungen vorzusehen, mittels derer die Dreh- und KippBewegungen der Werkstücke ausgeführt werden können. Hierzu sind gegebenenfalls um mehrere Achsen verschwenkbare Schwenktische vorgesehen, auf denen die Werkstücke aufgespannt und verschwenkt werden. Auch diese Ausgestaltung ist außerordentlich aufwändig.

Der Erfindung liegt die Aufgabe zugrunde, eine Fertigungsstraße der gattungsgemäßen Art so auszugestalten, dass ein Drehen und Kippen der Werkstücke in einfacher und damit kostengünstiger Weise möglich wird.

Diese Aufgabe wird erfindungsgemäß durch die Merkmale im Kennzeichnungsteil des Anspruches 1 gelöst. Durch die erfindungsgemäßen Maßnahmen wird es ermöglicht, durch Verschwenken des Werkstücks um eine einzige Achse, nämlich die Schwenkachse, das Werkstück selber um zwei Achsen um jeweils 90° zu verschwenken. In dieser mittels einer einzigen Schwenkachse um zwei Achsen verschwenkten Position wird das Werkstück in die Bearbeitungsmaschine verbracht und wieder aus ihr entnommen und wieder auf einer Werkstück-Transport-Einrichtung abgelegt und abtransportiert. Durch diese einfache Ausgestaltung wird auch ein sehr einfacher und damit kostengünstiger Aufbau erreicht. Auch sind für eine Fertigungsstraße nur ein oder zwei erfindungsgemäße Werkstück-Umsetzer erforderlich.

Die Ansprüche 2 und 3 geben eine besonders einfache Ausgestaltung der Dreh-Kipp-Vorrichtung wieder.

Aus Anspruch 4 ergibt sich, dass nur eine sehr geringe Drehung um die Schwenkachse erforderlich ist.

Anspruch 5 gibt eine Ausgestaltung für eine hohe Taktfrequenz der Fertigungsstraße wieder.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Fertigungsstraße gemäß der Erfindung in schematischer Darstellung,
- Fig. 2: eine Ansicht einer Dreh-Kipp-Vorrichtung nach der Erfindung in einer Darstellung gemäß dem Sichtpfeil II in Fig. 1 und Fig. 3,
- Fig. 3: eine Ansicht der Dreh-Kipp-Vorrichtung gemäß dem Sichtpfeil III in Fig. 1 und Fig. 2,
- Fig. 4: eine perspektivische Ansicht der Dreh-Kipp-Vorrichtung,
- Fig. 5: eine Ansicht der Dreh-Kipp-Vorrichtung gemäß Fig. 2 und dem Sichtpfeil V in Fig. 6 mit hochgeschwenktem Greifer und
- Fig. 6: eine Ansicht gemäß Fig. 3 und dem Sichtpfeil VI in Fig. 5 mit hochgeschwenktem Greifer.

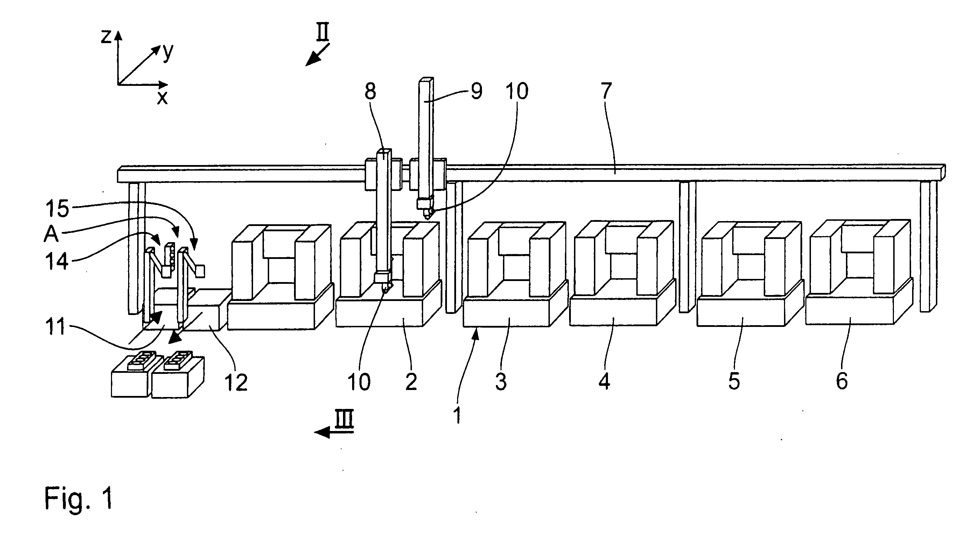

Bei der in Figur 1 dargestellten Fertigungsstraße sind mehrere Werkzeugmaschinen 1 bis 6 in einer Reihe nebeneinander angeordnet. Über ihnen verläuft eine Schiene 7, auf der Lade-Einrichtungen 8, 9 verschiebbar angeordnet sind, die jeweils an ihrem unteren Ende einen Werkstück-Greifer 10 aufweisen. Die Werkzeugmaschinen 1 bis 6 sind in einer horizontalen Weitergabe-Richtung x angeordnet. Senkrecht hierzu in einer ebenfalls horizontalen Zuführ- bzw. Abführ-Richtung y sind nebeneinander eine Werkstück-Zuführ-Einrichtung 11 und eine Werkstück-Abtransport-Einrichtung 12 vorgesehen. Hierbei handelt es sich in der Regel um sogenannte Rollenbänder. Die geschilderte Anordnung von Werkzeugmaschinen 1 bis 6, Lade-Einrichtungen 8, 9 und Werkstück-Zuführ-Einrichtungen 11 und Werkstück-Abtransport-Einrichtungen 12 ist in der Praxis allgemein üblich und weit verbreitet.

Auf der Einrichtung 11 werden Werkstücke 13 bzw. auf Werkstückträgern angebrachte Werkstücke in einer vorgegebenen Lage, beispielsweise liegend, in eine Werkstück-Übergabe-Position A herangeführt, in der sie jeweils von einer Lade-Einrichtung 8 bzw. 9 übernommen werden können. Wenn sie direkt von den Lade-Einrichtungen 8, 9 übernommen werden, werden sie parallel zu sich selbst verschoben und in eine Werkzeugmaschine 1 bis 6 eingeführt. Es soll aber auch möglich sein, die Werkstücke 13 der Werkzeugmaschine 1 bis 6 jeweils in einer doppelt gedrehten Position zuzuführen. Bei der Überführung in diese Position sollen sie um eine zur x-Richtung parallele Achse in eine um 90° gedrehte Lage gebracht werden. Weiterhin sollen sie um eine zu einer z-Richtung parallele Achse um 90° gedreht werden. Die z-Richtung steht senkrecht auf den x-y-Richtungs-Koordinaten. Der Abtransport des bearbeiteten Werkstücks 13 auf der Werkstück-Abtransport-Einrichtung 12 soll dann jeweils wieder in die gleiche Position erfolgen, in der das Werkstück 13 aus der Einrichtung 11 zugeführt worden ist, beispielsweise also in liegender Form. Für diese Drehung des Werkstücks 13 um zwei jeweils parallel zur x-Richtung und z-Richtung verlaufende Achsen sind zwei gleichartig ausgebildete, als Werkstück-Umsetzer dienende Dreh-Kipp-Vorrichtungen 14, 15 vorgesehen, die gleich ausgebildet sind und von denen deshalb nur eine nachfolgend beschrieben wird.

Die Dreh-Kipp-Vorrichtung 14, 15 weist eine auf dem Boden 16 abgestützte vertikale Stütze 17 auf, an der ein zur jeweiligen Einrichtung 11 bzw. 12 hin offener gabelförmiger Greifer 18 angebracht ist, der an seinem der jeweiligen Einrichtung 11 bzw. 12 zugewandten unteren Ende in y-Richtung verlaufende, dem Werkstück 13 bzw. einem das Werkstück 13 tragenden Werkstückträger angepasste, leistenförmige Halte-Einrichtungen 19 aufweist, zwischen die das von der Einrichtung 11 zugeführte Werkstück 13 eingeschoben wird. Die exakte Position des Werkstücks 13 zum Greifer 18 wird durch Sensoren erfasst; anschließend erfolgt eine Verriegelung zwischen Werkstück 13 bzw. Werkstückträger und den Halte-Einrichtungen 19, so dass das Werkstück 13 eine definierte Position relativ zu dem Greifer 18 hat.

Der Greifer 18 selber ist schwenkbar und zwar um eine Schwenkachse 20, die in der x-y-Ebene unter 45° gegenüber der x-Richtung und der y-Richtung geneigt ist. Weiterhin ist die Schwenkachse 20 gegenüber der x-y-Ebene und gegenüber der z-Richtung um 45° geneigt angeordnet. Die Schwenkachse 20 wird durch die Abtriebswelle 21 eines Untersetzungs-Getriebes 22 gebildet, an dessen Eingangswelle 23 ein elektrischer Schwenk-Antriebsmotor 24 angeschlossen ist. Das Untersetzungs-Getriebe 22 ist an einem an der Stütze 17 angebrachten Arm 25 befestigt, der parallel zur Schwenkachse 20 verläuft.

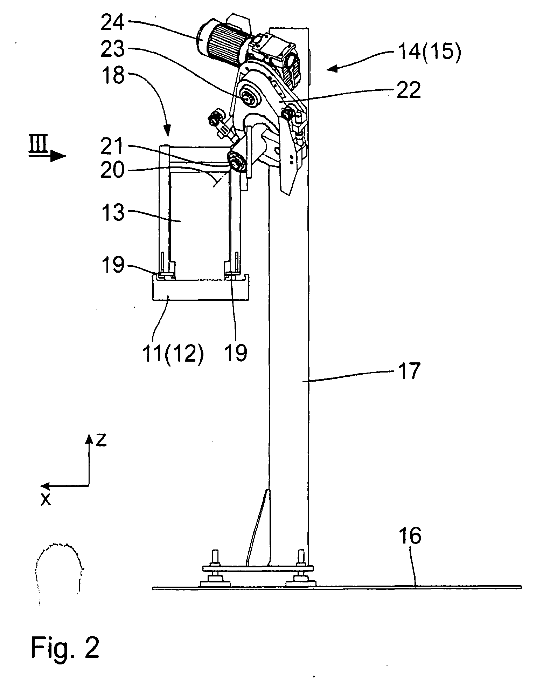

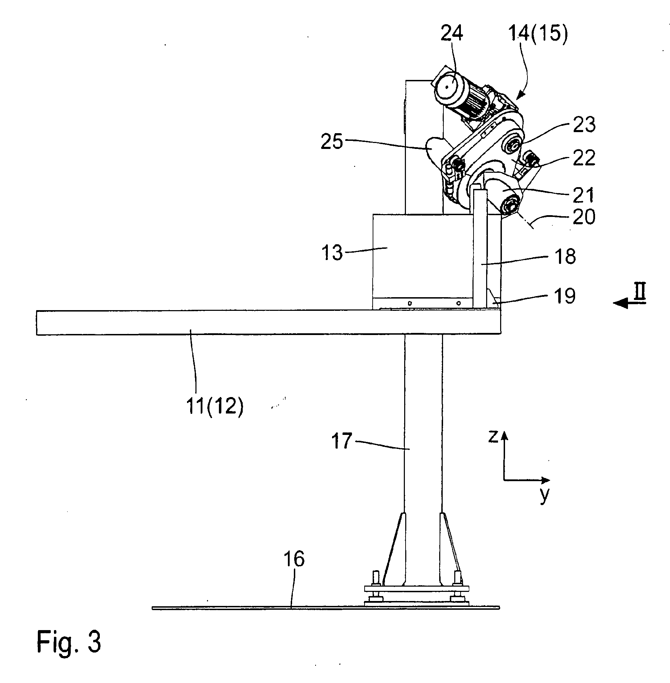

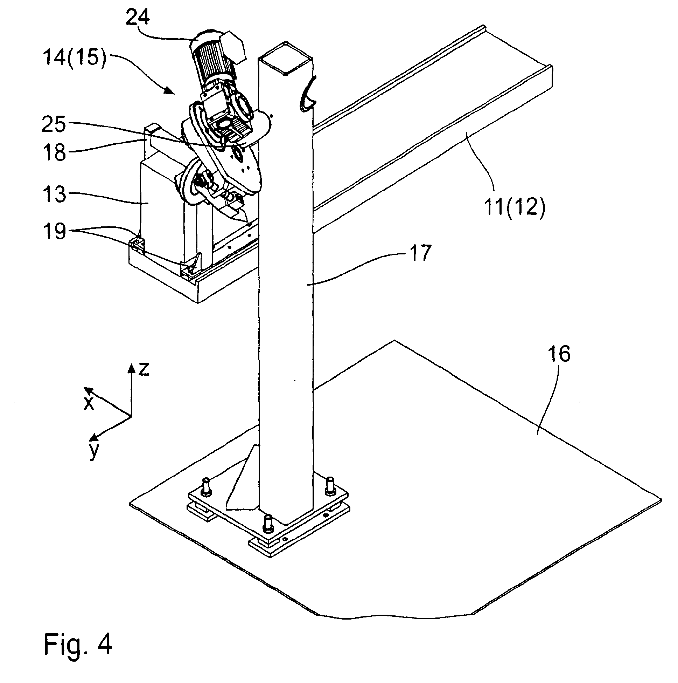

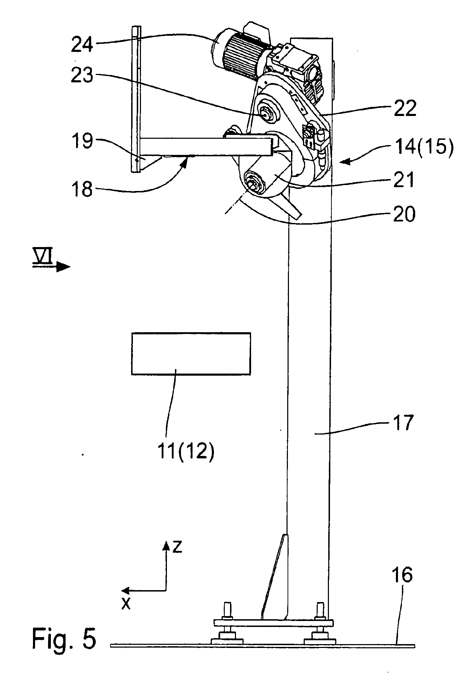

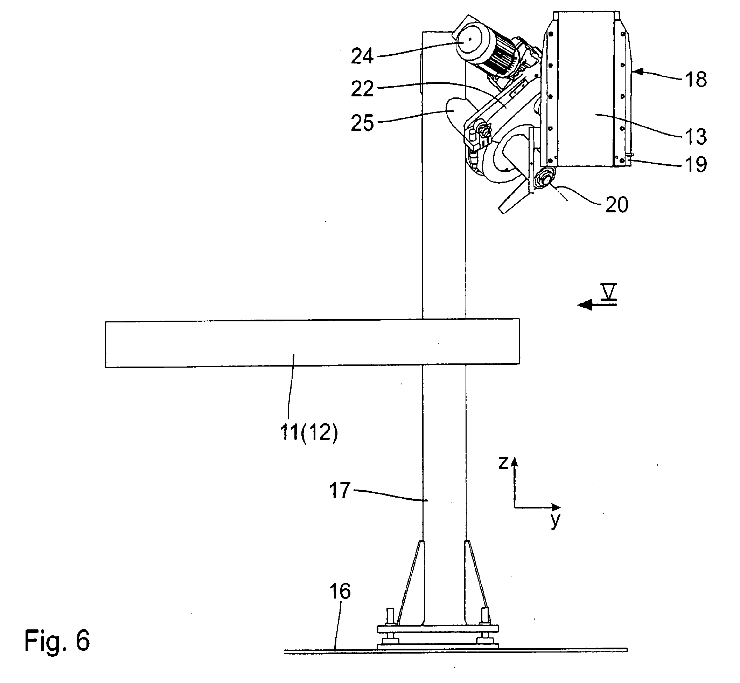

Durch entsprechende Betätigung des Antriebsmotors 24 wird der Greifer 18 nach der Aufnahme des Werkstücks 13 bzw. eines Werkstückträgers mit Werkstück 13 um die schräg geneigte Schwenkachse 20 um 120° geschwenkt und kommt dadurch aus der in Figur 2 bis 4 dargestellten liegenden Position auf der Werkstück-Zuführ-Einrichtung 11 in eine hochgeschwenkte Position, in der also das Werkstück 13 zum einen um eine zur x-Richtung parallele Achse um 90° verschwenkt ist und in der es um eine zur z-Richtung parallele Achse um 90° verschwenkt ist. Diese verschwenkte Stellung ergibt sich aus den Figuren 5 und 6, wobei in Figur 5 aus Gründen der Übersichtlichkeit das Werkstück nicht dargestellt ist. Im Übrigen ist sie in Figur 1 für die Dreh-Kipp-Vorrichtung 14 angedeutet. In dieser Position wird das Werkstück 13 bzw. der Werkstückträger mit Werkstück 13 von der Lade-Einrichtung 8 ergriffen und zur für die Bearbeitung vorgesehenen Werkzeug-Maschine 1 transportiert. Mittels der Lade-Einrichtung 8 oder 9 wird es von Werkzeugmaschine 2 zu Werkzeugmaschine 3 bis 6 weitertransportiert. Nach der Bearbeitung wird das Werkstück 13 von einer Lade-Einrichtung 8 oder 9 in unveränderter Lage zur Vorrichtung zurückgebracht, wieder in die liegende Position verschwenkt und auf der Werkstück-Abtransport-Einrichtung 12 abgelegt.

Wenn dagegen ein Werkstück 13 in der Lage bearbeitet werden soll, in der es auf der Zuführ-Einrichtung 11 zugeführt worden ist, dann wird es vom Werkstück-Greifer 10 der entsprechenden Lade-Einrichtung 8 bzw. 9 direkt erfasst und zur Werkzeugmaschine 1 bis 6 gebracht und von dort wieder zurück transportiert und auf der Werkstück-Abtransport-Einrichtung 12 abgelegt.

## Patentansprüche

1. Fertigungsstraße zur Bearbeitung von Werkstücken (13),
- mit mehreren in einer horizontalen x-Richtung nebeneinander angeordneten Werkzeugmaschinen (1 bis 6),
- mit mindestens einer Werkstück-Transport-Einrichtung (11, 12) zur Zuführung und zum Abtransport der Werkstücke (13), die in einer zu der x-Richtung senkrecht verlaufenden horizontalen y-Richtung verläuft, und
- mit mindestens einer in der x-Richtung bewegbar angeordneten Lade-Einrichtung (8, 9) zum Transport der Werkstücke (13) von der mindestens einen Werkstück-Transport-Einrichtung (11, 12) zu mindestens einer Werkzeugmaschine (1 bis 6) und zurück zu der mindestens einen Werkstück-Transport-Einrichtung (11, 12),
**dadurch gekennzeichnet,**
- **dass** der mindestens einen Werkstück-Transport-Einrichtung (11, 12) und der mindestens einen Lade-Einrichtung (8, 9) mindestens ein als Dreh-Kipp-Vorrichtung (14, 15) ausgebildeter Werkstück-Umsetzer mit Greifer (18) zugeordnet ist und
**dass** der Greifer (18) um eine Schwenkachse (20) schwenkbar ausgebildet ist,
-- die in einer x-y-Ebene gegenüber der x-Richtung und der y-Richtung jeweils unter 45° verläuft und
-- die gegenüber der x- und y-Ebene und einer senkrecht hierzu verlaufenden z-Richtung unter 45° geneigt ist.

2. Fertigungsstraße nach Anspruch 1, **dadurch gekennzeichnet,**
**dass** die Dreh-Kipp-Vorrichtung (14, 15) einen Schwenk-Antriebsmotor (24) aufweist, der mit dem Greifer (18) in Drehantriebsverbindung steht.

3. Fertigungsstraße nach Anspruch 1 oder 2, **dadurch gekennzeichnet,**
**dass** zwischen dem Schwenk-Antriebsmotor (24) und dem Greifer (18) ein Untersetzungs-Getriebe (22) mit einer Eingangswelle (23) und einer Abtriebswelle (21) angeordnet ist, wobei der Schwenk-Antriebsmotor (24) mit der Eingangswelle (23) und der Greifer (18) mit der Abtriebswelle (21) verbunden ist.

4. Fertigungsstraße nach Anspruch 3, **dadurch gekennzeichnet,**
**dass** die Schwenkachse (20) um 120° schwenkbar ist.

5. Fertigungsstraße nach einem der Ansprüche 1 bis 4, **dadurch gekennzeichnet,**
**dass** die Werkstück-Transport-Einrichtung durch eine Werkstück-Zuführ-Einrichtung (11) und eine hiervon gesonderte, parallel hierzu verlaufende Werkstück-Abtransport-Einrichtung (12) gebildet ist und
**dass** sowohl der Werkstück-Zuführ-Einrichtung (11) als auch der Werkstück-Abtransport-Einrichtung (12) eine Dreh-Kipp-Vorrichtung (14, 15) zugeordnet ist.

## Claims

1. Production line for machining workpieces (13),
- with a plurality of machine tools (1 to 6) positioned next to one another in a horizontal x direction,
- with at least one workpiece transport device (11, 12) to deliver and remove the workpieces (13) and which extends in a horizontal y direction running vertically to the x direction, and
- with at least one loader (8, 9) positioned so that it may move in the x direction, to transport the workpieces (13) from the at least one workpiece transport device (11, 12) to at least one machine tool (1 to 6) and back to the at least one workpiece transport device (11, 12),
**characterised**
- **in that** at least one workpiece change-over device which is configured as a rotary-tilt device (14, 15) and has a gripper (18) is associated with the at least one workpiece transport device (11, 12) and the at least one loader (8, 9), and
- **in that** the gripper (18) is configured so that it may swivel about a swivel axis (20) which extends at 45° in each case in an x-y plane with respect to the x direction and the y direction and which is inclined at an angle of 45° with respect to the x and y plane and to a z direction extending vertically to said x and y plane.

2. Production line according to claim 1, **characterised in that** the rotary-tilt device (14, 15) has a swivel drive motor (24) which is in a rotary-drive connection with the gripper (18).

3. Production line according to claim 1 or 2, **characterised in that** a reduction gear (22) with an input shaft (23) and an output shaft (21) is positioned between the swivel drive motor (24) and the gripper (18), the swivel drive motor (24) being connected to the input shaft (23) and the gripper (18) being connected to the output shaft (21).

4. Production line according to claim 3, **characterised in that** the swivel axis (20) may be swivelled about 120°.

5. Production line according to any one of claims 1 to 4, **characterised in that** the workpiece transport device is formed by a workpiece delivery device (11) and a separate workpiece removal device (12) running parallel to the workpiece delivery device (11) and **in that** a rotary-tilt device (14, 15) is associated with both the workpiece delivery device (11) and the workpiece removal device (12).

## Revendications

1. Chaîne de production pour l'usinage de pièces (13),
- avec plusieurs machines-outils (1 à 6) disposées les unes à côté des autres dans un sens horizontal x,
- avec au moins un dispositif de transport de pièces (11, 12) pour amener et évacuer les pièces (13), orientée dans un sens horizontal y perpendiculaire au sens x vertical, et
- avec au moins un dispositif de chargement (8, 9), disposé de manière mobile dans le sens x, pour le transport des pièces (13) du dispositif de transport de pièces (11, 12) minimum à une machine-outil (1 à 6) minimum et pour le retour au dispositif de transport de pièces (11, 12) minimum,
**caractérisée en ce que**
- au moins un dispositif de déplacement d'outils avec preneur (18) réalisé comme dispositif oscillo-battant (14, 15) est affecté au dispositif de transport de pièces (11, 12) minimum et au dispositif de chargement (8, 9) minimum et
**en ce que** le preneur (18) est réalisé de manière à pouvoir pivoter autour d'un axe de pivotement (20),
-- respectivement inférieur à 45° dans un plan x-y par rapport au sens x et au sens y et
-- qui est incliné à moins de 45° par rapport au plan x et y et à un sens z perpendiculaire à ce dernier.

2. Chaîne de production selon la revendication 1, **caractérisée en ce que** le dispositif oscillo-battant (14, 15) présente un moteur d'entraînement de pivotement (24) qui est en relation d'entraînement par rotation avec le preneur (18).

3. Chaîne de production selon la revendication 1 ou 2, **caractérisée en ce qu'**un démultiplicateur (22) avec un arbre d'entrée (23) et un arbre de sortie (21) est disposé entre le moteur d'entraînement de pivotement (24) et le preneur (18), le moteur d'entraînement de pivotement (24) étant relié à l'arbre d'entrée (23) et le preneur (18) à l'arbre de sortie (21).

4. Chaîne de production selon la revendication 3, **caractérisée en ce que** l'axe de pivotement (20) peut pivoter de 120°.

5. Chaîne de production selon l'une quelconque des revendications 1 à 4, **caractérisée en ce**
**que** le dispositif de transport de pièces est formé par un dispositif d'amenée de pièces (11) et par un dispositif d'évacuation de pièces (12) parallèle qui en est séparé et en ce qu'un dispositif oscillo-battant (14, 15) est affecté tant au dispositif d'amenée des pièces (11) qu'au dispositif d'évacuation de pièces (12).
